# EUROPÄISCHE PATENTSCHRIFT

(11) **EP 3 194 800 B1**
(45) Veröffentlichungstag und Bekanntmachung des Hinweises auf die Patenterteilung: **06.11.2019**
(21) Anmeldenummer: 15759787.3
(22) Anmeldetag: 04.09.2015
(51) Int. Cl.: F16D 51/20, F16D 65/09

(54) **BREMSVORRICHTUNG UND BREMSBACKE**
BRAKING DEVICE AND BRAKE SHOE
SYSTÈME DE FREINAGE ET MÂCHOIRE DE FREIN

(30) Priorität: 19.09.2014 DE 102014218938
(43) Veröffentlichungstag der Anmeldung: 26.07.2017
(73) Patentinhaber: SAF-HOLLAND GmbH, 63856 Bessenbach (DE); Knott GmbH, D-83125 Eggstätt (DE)
(72) Erfinder: MARSCHNER, Oliver, 63808 Haibach (DE); KLUMPNER, Andreas, 83368 St. Georgen (DE); KLUMPNER, Bernhard, 83368 St. Georgen (DE)
(74) Vertreter: Müller Schupfner & Partner Patent- und Rechtsanwaltspartnerschaft mbB
(86) Internationale Anmeldenummer: PCT/EP2015/070279
(87) Internationale Veröffentlichungsnummer: WO 2016/041790

(56) Entgegenhaltungen:
- EP-A1- 1 748 209
- DE-A1- 19 649 487
- US-A- 1 787 780
- US-A- 2 004 062
- US-A- 2 528 707

## Beschreibung

Die Erfindung betrifft eine Bremsvorrichtung, insbesondere eine Trommelbremse, sowie eine Bremsbacke für eine Trommelbremse.

Trommelbremsen einschließlich deren Bremsbacken sind im Stand der Technik bekannt. Dabei werden üblicherweise zwei im Inneren einer Bremstrommel angeordnete Bremsbacken durch eine Betätigungseinrichtung gegen die Innenseite der Bremstrommel gepresst. Durch die Rotationsbewegung der Bremstrommel relativ zu den Bremsbacken ergibt sich eine unterschiedliche Belastung der mit der Bremstrommel in Eingriff gelangenden Bremsbacken. Dabei findet an einer der Bremsbacken eine sogenannte Selbstverstärkung statt, während die andere Bremsbacke mit geringerer Anpresskraft an die Innenseite der Bremstrommel gedrückt wird. Eine Trommelbremse gilt als empfindlich, wenn sich ihre Selbstverstärkung mit einer Schwankung des Reibwerts stark verändert. Damit es zu keinen nennenswerten Bremsmomentschwankungen kommt, ist eine niedrige Empfindlichkeit erwünscht. Da sowohl die Selbstverstärkung als auch die Empfindlichkeit von der Bremskinematik beeinflusst werden, hat die Gestaltung einer Trommelbremse immer möglichst beide Größen zu berücksichtigen. Bei bekannten Trommelbremsen sind die Bremsbacken jeweils an einem Lagerelement, welches zylindrische oder sphärische Kontaktflächen aufweisen kann, schwenkbar gelagert. Zusätzlich können Zwischenelemente zum Einsatz kommen. Dabei ist es in der Regel notwendig, die Lagerung in regelmäßigen Intervallen zu schmieren, um ihre Funktionsfähigkeit aufrechtzuerhalten. Dies bedeutet einen erhöhten Wartungsaufwand.

Die DE 196 49 487 A1 betrifft eine Bremsbacke für Trommelbremsen, bei denen auf einem gemeinsamen Bremsbolzen zwei Bremsbackenstege der durch eine Spreizvorrichtung spreizbaren Bremsbackenträger am Bremsschild abgestützt sind.

Die US-2,004,062 und die US-1,787,780 betreffen Trommelbrems-Vorrichtungen, bei welchen die Bremsbacken von einem Bolzen eines Bremsträgers abgestützt sind.

Die EP 1 748 209 betrifft eine Bremsbacke für eine Trommelbremse mit einem segmentförmig gebogenen Belagträger, wobei im Bereich eines innenseitig an dem Belagträger befestigten Steges Abstützelemente zur Einleitung der Bremskraft in die Bremsbacke angeordnet sind.

Die US-2,528,707 betrifft eine Trommelbremse, bei welcher die Bremsbacken über eine Hebeleinrichtung an einem Bremsbolzen eines Bremsträgers gelagert sind.

Die US-4,157,747 betrifft eine Trommelbremse mit zwei Bremsbacken, welche jeweils auf einem separaten Lagerbolzen gelagert sind, wobei die Bremsbacken jeweils zwei geöffnete Lageraugen aufweisen, welche C-förmig ausgebildet sind und an dem mit einer Abflachung versehenen Lagerbolzen anordenbar sind.

Der Erfindung liegt die Aufgabe zugrunde, eine Bremsvorrichtung und eine Bremsbacke anzugeben, welche möglichst einfach zu montieren sind und eine zuverlässige Bremsung eines Rades gewährleisten.

Die Aufgabe wird erfindungsgemäß gelöst durch eine Bremsvorrichtung mit den Merkmalen des Anspruchs 1 sowie eine Bremsbacke mit den Merkmalen des Anspruchs 11. Bevorzugte Ausgestaltungen der Erfindung sind in den abhängigen Ansprüchen angegeben.

Die erfindungsgemäße Bremsvorrichtung zum Bremsen eines Rades, insbesondere Trommelbremse, umfasst zwei gegenüberliegende Bremsbacken, welche schwenkbar an einem Bremsträger gelagert sind. Erfindungsgemäß sind die Bremsbacken um eine gemeinsame Schwenkachse schwenkbar gelagert.

Erfindungsgemäß weist zumindest eine der Bremsbacken eine Steganordnung mit zwei Bremsbackenstegen auf, wobei einer der Bremsbackenstege ein offenes Lagerauge und der andere der Bremsbackenstege ein geschlossenes oder um weniger als 180° geöffnetes Lagerauge aufweisen. Hierdurch wird eine besonders einfache Montage der Bremsbacken ermöglicht. Die Montage und die axiale Fixierung kann derart erfolgen, dass sich die Möglichkeit ergibt, den Lagerbolzen soweit in den Lagerbereich der ersten Bremsbacke einzuschieben, dass die erste Bremsbacke in Position gehalten wird, während die zweite Bremsbacke montiert wird.

Die erfindungsgemäße Bremsbacke für eine Bremsvorrichtung, insbesondere eine Trommelbremse, umfasst einen Bremsbelagträger zum Aufnehmen eines Bremsbelags und eine Steganordnung mit mindestens einem Bremsbackensteg, der mit dem Bremsbelagträger verbunden ist. Die Steganordnung bzw. der mindestens eine Bremsbackensteg weist einen Lagerbereich zum schwenkbaren Lagern an einer Lagereinrichtung, beispielsweise einem Bremsträger bzw. einem Lagerbolzen, auf. Die Steganordnung ist zweckmäßigerweise asymmetrisch an dem Bremsbelagträger, insbesondere relativ zu einer axialen Mittenebene des Bremsbelagträgers, angeordnet. In anderen Worten ist die Steganordnung entlang der Schwenkachse der Bremsbacke asymmetrisch oder außermittig zur Mitte der Erstreckung des Bremsbelagträgers entlang der Schwenkachse angeordnet.

Erfindungsgemäß weist die Bremsbacke jeweils mindestens zwei, insbesondere parallel zueinander verlaufende, Bremsbackenstege auf, deren Abstand zur axialen Mittenebene der Bremsbacke unterschiedlich ist.

Ein erster Grundgedanke der Erfindung kann darin gesehen werden, die gegenüberliegenden Bremsbacken der Bremsvorrichtung um einen gemeinsamen Drehpunkt bzw. eine gemeinsame Drehachse zu lagern. Auf diese Weise kann der maximal mögliche Abstand zwischen Bremsenmitte und Lagerpunkt genutzt werden. Im Vergleich zu einer Bremsbackenlagerung mit zwei Lagerpunkten wird die Selbstverstärkung der Trommelbremse erhöht, ohne jedoch ihre Empfindlichkeit zu beeinflussen. Dies bedeutet eine Verbesserung des Wirkungsgrades der Bremse. Zusätzlich zu der Ausnutzung des optimalen Abstützpunktes der Bremsbacken kann mit der erfindungsgemäßen zentralen Anordnung der Aufwand für die Herstellung der erfindungsgemäßen Bremsbackenlagerung reduziert werden. Insbesondere kann der Bremsträger einfacher gestaltet sein, indem dieser nur eine Lagerstelle für die Bremsbacken aufweist. Die gemeinsame Lagerstelle für die Bremsbacken führt zudem zu einer Reduzierung des Wartungsaufwands. Die auflaufende Bremsbacke und die ablaufende Bremsbacke sind erfindungsgemäß um einen gemeinsamen Drehpunkt bzw. eine gemeinsame Drehachse oder Schwenkachse gelagert. Die Schwenkachse erstreckt sich in axialer Richtung innerhalb einer Mittenebene der Bremse zwischen den gegenüberliegenden Bremsbacken. In anderen Worten liegt die Schwenkachse in oder parallel zur Mittenebene. Die Dreh- bzw. Schwenkachse kann insbesondere durch einen am Bremsträger angeordneten Lagerbolzen gebildet sein. Die Spreizung der Bremsbacken erfolgt vorzugsweise durch eine Aktuatoreinheit bzw. Betätigungseinrichtung, beispielsweise eine Spreizkeileinheit, einen (Rad-)Bremszylinder oder eine Bremsnocke.

Vorzugsweise sind die Bremsbacken um einen gemeinsamen Lagerbolzen schwenkbar gelagert. Der insbesondere zylindrische Lagerbolzen kann integral mit dem Bremsträger geformt sein oder als separates Element am Bremsträger angeordnet sein.

In einer bevorzugten Ausführungsform ist der Lagerbolzen ein kaltgezogener Rundstab. Durch das Kaltziehen wird eine besondere Festigkeit erreicht. Zudem ist es vorteilhaft, dass der gezogene Außendurchmesser nicht weiter bearbeitet werden braucht. Vorzugsweise weist die Oberfläche des gezogenen Rundstabs bereits die erforderliche Genauigkeit, Rauigkeit und Oberflächenhärte auf. Hierdurch ist es möglich, dass der Rundstab insbesondere im Bereich seiner Lagerflächen für die Bremsbacken nicht weiter, insbesondere spanend, bearbeitet ist. Die Ausführung als Rundstab senkt den Verschleiß und Wartungsaufwand.

In einer weiteren bevorzugten Ausführungsform ist eine Sicherungseinrichtung, insbesondere mindestens ein Sicherungsring, zur axialen Sicherung des Lagerbolzens vorgesehen. Die Sicherungseinrichtung wird an einem axialen Endbereich des Lagerbolzens befestigt und sichert auf diese Weise vorteilhafterweise auch die Bremsbacke am Lagerbolzen. Vorzugsweise enthält der Lagerbolzen mindestens eine Nut zur Fixierung eines Sicherungsringes. Die an der Zylinderfläche des Lagerbolzens ausgebildete Nut kann beispielsweise durch eine nachträgliche spanende Bearbeitung eingebracht sein. Vorzugsweise enthält der Lagerbolzen an beiden axialen Endbereichen jeweils eine Nut bzw. einen Einstich für einen Sicherungsring.

Eine besonders vorteilhafte Montage kann dadurch erreicht werden, dass der Lagerbolzen mindestens eine Abflachung im Bereich seiner insbesondere zylindrischen Mantelfläche (Umfangsfläche, Zylinderfläche) aufweist. Gemäß dieser Ausführungsform ist also die zumindest bereichsweise zylindrische Mantelfläche des Lagerbolzens in zumindest einem Bereich abgeflacht. Im Querschnitt des Lagerbolzens fehlt also vorzugsweise ein Kreissegment. Besonders bevorzugt ist es, dass der Lagerbolzen zwei gegenüberliegende und/oder auf einer Seite sowie vorzugsweise einer Ebene liegende Abflachungen aufweist. Der abgeflachte zylindrische Lagerbolzen ermöglicht das Montieren einer Bremsbacke, welche ein um weniger als 180° geöffnetes Lagerauge aufweist. Die radiale Fixierung der Bremsbacke kann insbesondere durch eine Drehung des Lagerbolzens um seine eigene Achse erfolgen und/oder durch Verschwenken der Bremsbacke in ihre Betriebsposition relativ zum - vorzugsweise gegen Verdrehen gesicherten - Lagerbolzen.

Zweckmäßigerweise ist der Lagerbolzen drehbar an einem Bremsträger angeordnet oder anordenbar und zwischen einer ersten Lage, in welcher der Lagerbolzen in ein um weniger als 180° geöffnetes Lagerauge einer Bremsbacke einführbar ist, und einer zweiten Lage verlagerbar bzw. verdrehbar ist, in welcher der Lagerbolzen im Lagerauge gehalten ist. In der ersten Lage ist somit der Lagerbolzen im Bereich seiner Abflachung(en) in das Lagerauge radial, d. h. im wesentlichen senkrecht zur Schwenkachse, einführbar. Das Lagerauge hat vorzugsweise einen Innendurchmesser, welcher größer oder zumindest gleich dem Außendurchmesser des Lagerbolzens im umfänglichen Bereich außerhalb der Abflachung(en) ist. Die lichte Weite des Öffnungs- bzw. Mündungsspalts des Lagerauges ist jedoch kleiner als der Außendurchmesser des Lagerbolzens im umfänglichen Bereich außerhalb der Abflachung(en) aber größer als die radiale Erstreckung bzw. Durchmesser des Lagerbolzens im Bereich der Abflachung(en).

Im Hinblick auf eine möglichst geringe Anzahl unterschiedlicher Teile ist es bevorzugt, dass die Bremsbacken, also die auflaufende Bremsbacke und die ablaufende Bremsbacke, gleich ausgeführt sind.

Zur Vermeidung eines axialen Versatzes der Bremsbacken ist es dabei bevorzugt, dass die Bremsbacken eine Steganordnung mit mindestens einem Bremsbackensteg aufweisen, wobei die Steganordnung asymmetrisch an dem Bremsbelagträger, insbesondere relativ zu einer axialen Mittenebene des Bremsbelagträgers, angeordnet ist. Die Steganordnung ist dabei in einer axialen Richtung gegenüber einer Mittenebene der Bremsbacke versetzt, so dass der mindestens eine Steg oder die Stege der Steganordnung bei einer gegenüberliegenden Anordnung der Bremsbacken zueinander entlang deren Rotationsachse versetzt sind. Auf diese Weise kommt es zu keinen Überschneidungen bei der Anordnung an der gemeinsamen Lagerachse.

Vorzugsweise weisen die Bremsbacken jeweils mindestens zwei, insbesondere parallel zueinander verlaufende, Bremsbackenstege auf, deren Abstand zur axialen Mittenebene der Bremsbacke unterschiedlich ist. Die Bremsbackenstege, oder Stegbleche, sind also bezüglich der axialen Mittenebene der Bremsbacke, bzw. des Bremsbelagträgers, asymmetrisch zueinander angeordnet. Der mindestens eine Bremsbackensteg dient zum einen der Lagerung der Bremsbacken und erhöht außerdem bei gleicher Masse die Steifigkeit der Bremsbacke.

Vorteilhafterweise ist die Bremsvorrichtung derart ausgebildet, dass das Verhältnis des Versatzes der Steganordnung, insbesondere zumindest eines der Bremsbackenstege, zu der Dicke bzw. Erstreckung des Bremsbackensteges entlang der Schwenkachse im Bereich von 1,0 - 3,0, vorzugsweise 1,1 - 2,1 und bevorzugt 1,3 - 1,7 beträgt.

Der Bremsbelagträger ist dazu vorgesehen, einen Bremsbelag aufzunehmen und ist im Querschnitt kreisbogenförmig gestaltet. Die Krümmung des Bremsbelagträgers entspricht im Wesentlichen der Krümmung der Bremstrommel. Die Steganordnung erstreckt sich an einer Innenseite des kreisbogenförmigen Bremsbelagträgers. Der mindestens eine Bremsbackensteg erstreckt sich in einer sich quer, insbesondere senkrecht, zur Radachse erstreckenden Ebene.

In einer weiteren bevorzugten Ausführungsform ist vorgesehen, dass der Bremsbackensteg ein geöffnetes Lagerauge aufweist. Auf diese Weise kann die Montage der Bremsbacke an der Lagerstelle des Bremsträgers, insbesondere dem Lagerbolzen, besonders einfach durchgeführt werden. Zudem kann durch eine ausreichende Öffnung des Lagerauges gegebenenfalls auch eine Überschneidung mit der gegenüberliegenden Bremsbacke vermieden werden. Sofern die Steganordnung mehrere Bremsbackenstege aufweist, ist es bevorzugt, dass mindestens einer der Bremsbackenstege ein geöffnetes Lagerauge aufweist.

Es ist bevorzugt, dass das Lagerauge um maximal 180°, vorzugsweise 150° - 175°, geöffnet ist. Das Lagerauge ist also vorzugsweise zu mindestens 50% geschlossen und die Öffnung erstreckt sich lediglich über maximal 180° des Umfangs. In einer Ausführungsform ist das Lagerauge um 180° geöffnet. In einer weiteren, besonders bevorzugten Ausführungsform ist das Lagerauge um weniger als 180° geöffnet. Das Lagerauge ist also überwiegend geschlossen und die Öffnung erstreckt sich lediglich über weniger als 180° des Umfangs. Dies ermöglicht zum einen eine komfortable Montage und zum anderen eine sicher Lagerung, insbesondere an einem nicht-zylindrischen (beispielsweise abgeflachten) Lagerbolzen. Insbesondere ein Öffnungsbereich von 150° - 175° hat sich als besonders vorteilhafter Bereich erwiesen, da dieser Bereich einen besonders guten Kompromiss aus Stabilität und Festigkeit, also Betriebssicherheit, einerseits und Montagefreundlichkeit andererseits darstellt. Grundsätzlich ist es aber auch denkbar, dass das Lagerauge um mindestens 180° oder mehr als 180° geöffnet ist.

In einer weiteren bevorzugten Ausführungsform sind die Bremsbackenstege, insbesondere Stegbleche, gekröpft. Hierdurch kann die Kippneigung der Bremsbacken bei identischem Lagerspiel verkleinert werden.

Die erfindungsgemäße Bremsbacke kann sämtliche im Zusammenhang mit der erfindungsgemäßen Bremsvorrichtung beschriebenen Merkmale aufweisen.

Vorzugsweise weist der Bremsträger, an welchem die Bremsbacken gelagert sind, eine gemeinsame Lagerstelle zur Lagerung der Bremsbacken auf. Die Lagerstelle kann durch ein Lagerauge, einen Lagerbolzen oder ein anderes geeignetes Lagerelement gebildet sein.

Insgesamt ist die erfindungsgemäße Bremsvorrichtung besonders montage- und demontagefreundlich.

Die Erfindung wird nachfolgend anhand von bevorzugten Ausführungsformen, welche in den beiliegenden schematischen Figuren dargestellt sind, weiter beschrieben. In den Figuren zeigt:
- Fig. 1:: eine erste Ausführungsform einer erfindungsgemäßen Bremsbacke;
- Fig. 2:: eine zweite Ausführungsform einer erfindungsgemäßen Bremsbacke;
- Fig. 3:: eine dritte Ausführungsform einer erfindungsgemäßen Bremsbacke;
- Fig. 4:: eine vierte Ausführungsform einer erfindungsgemäßen Bremsbacke und
- Fig. 5:: eine erfindungsgemäße Bremsvorrichtung.

Gleiche oder gleichwirkende Elemente sind in sämtlichen Figuren mit denselben Bezugszeichen gekennzeichnet. Die anhand der einzelnen Ausführungsformen beschriebenen Merkmale können, soweit technisch möglich, auch miteinander kombiniert werden.

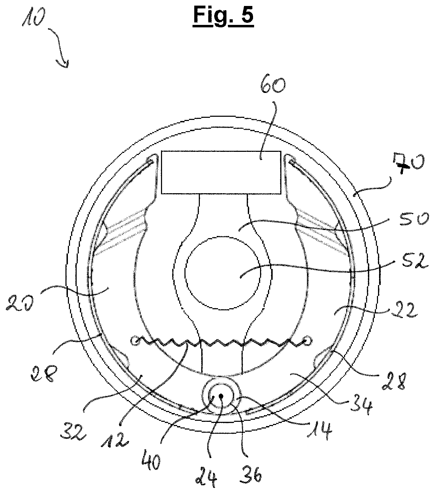

Zunächst wird anhand der Fig. 5 eine erfindungsgemäße Bremsvorrichtung 10 beschrieben, welche mindestens zwei gegenüberliegende, erfindungsgemäße Bremsbacken 20, 22 aufweist.

Die Bremsvorrichtung 10 umfasst eine Bremstrommel 70 und innerhalb der Bremstrommel 70 an einem Bremsträger 50 schwenkbar gelagerte Bremsbacken 20, 22. Dabei ist beispielsweise eine erste Bremsbacke 20 eine auflaufende Bremsbacke und eine zweite Bremsbacke 22 eine ablaufende Bremsbacke. Die Bremsbacken 20, 22 sind um eine gemeinsame Schwenkachse 24 schwenkbar gelagert. Die Schwenkachse 24 wird beispielsweise durch einen Lagerbolzen 40 gebildet, welcher Teil des Bremsträgers 50 oder als separates Element ausgeführt sein kann. Zur Lagerung des Lagerbolzens 40 kann der Bremsträger 50 eine Lageröffnung aufweisen, welche eine gemeinsame Lagerstelle für die Bremsbacken 20, 22 bildet. Der Bremsträger 50 weist ferner eine Achsöffnung 52 zur Aufnahme einer nicht dargestellten Fahrzeugachse auf. Vorzugsweise lässt sich der Bremsträger 50 rotationsfest an der Fahrzeugachse befestigen.

Zur Spreizung der Bremsbacken 20, 22 ist in grundsätzlich bekannter Weise eine Betätigungseinrichtung 60 vorgesehen. Die Betätigungseinrichtung 60 kann beispielsweise eine Spreizkeileinheit, einen Radbremszylinder oder eine Bremsnocke aufweisen. Der Lagerbolzen 40 ist der Betätigungseinrichtung 60 diametral gegenüberliegend angeordnet.

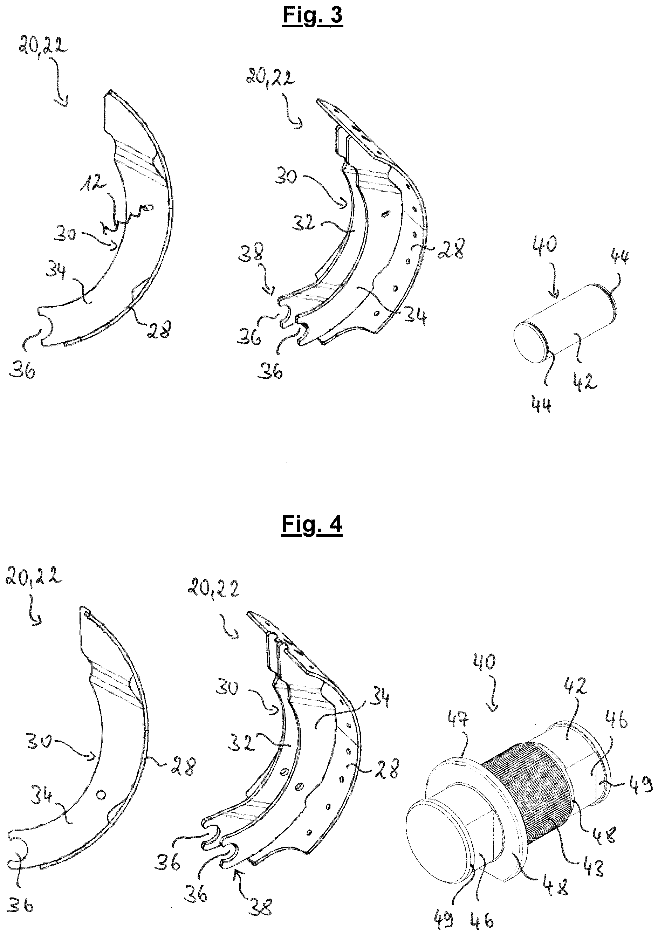

Zwischen den Bremsbacken 20, 22 kann ein Federelement 12 gespannt sein, welches die Bremsbacken 20, 22 auf Zug beaufschlagt und entgegen der durch die Betätigungseinrichtung 60 aufgebrachten Bremsbetätigungskraft nach innen zieht. Das Federelement 12 kann unter- oder oberhalb der Achsöffnung 52 angeordnet sein. Alternativ oder zusätzlich kann auch ein Federelement 12 zwischen jeweils einer Bremsbacke 20, 22 und dem Bremsträger 50 gespannt sein. In einer weiteren Alternative können auch mehrere Federelemente 12 angeordnet sein, die sich ihre Funktion teilen. Darüber hinaus kann das Federelement 12, insbesondere bei einer Ausführung der Bremsbackenlagerung, wie nachfolgend mit Bezug auf Fig. 3 beschrieben, die Bremsbacken 20, 22 auch am Lagerbolzen 40 radial sichern.

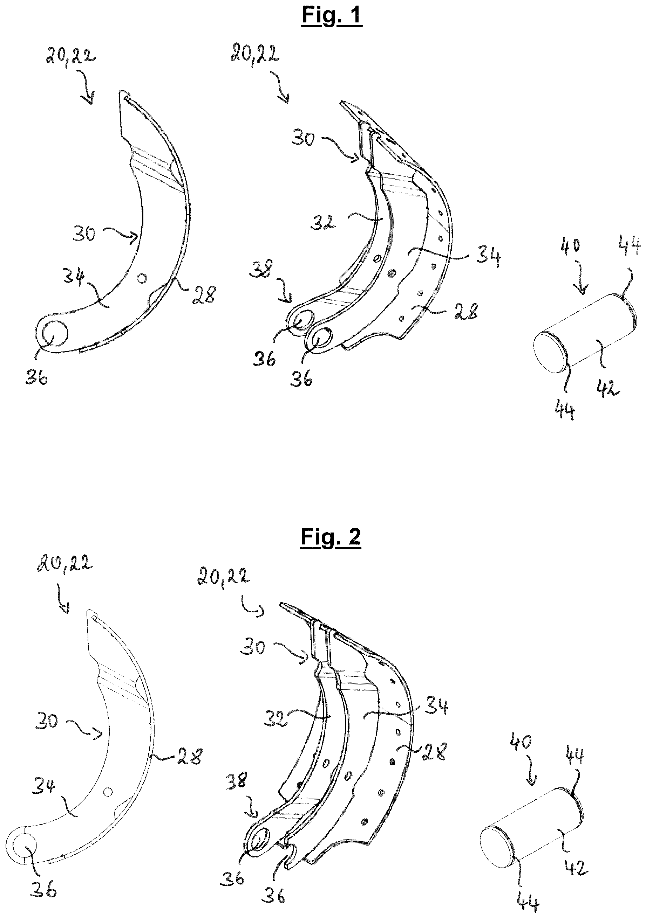

Die Bremsbacken 20, 22 sowie der Lagerbolzen 40 sind in erfindungsgemäßer Weise, beispielsweise gemäß Figuren 1 bis 4, ausgebildet und vorzugsweise identisch. Die Figuren 1 bis 4 zeigen dabei jeweils eine Bremsbacke 20 in einer seitlichen Aufsicht und einer perspektivischen Ansicht sowie einen Lagerbolzen 40 zur Lagerung der Bremsbacke 20 an einem Bremsträger 50 in einer perspektivischen Ansicht.

Die Bremsbacke 20 umfasst einen Bremsbelagträger 28 mit einer gebogenen Außenfläche zur Aufnahme eines in den Figuren nicht dargestellten Bremsbelags. Der Bremsbelagträger 28 weist insgesamt einen kreisbogenförmigen Querschnitt auf. An einer Innenseite des (Kreis-)bogenförmigen Bremsbelagträgers 28 sind zwei Bremsbackenstege 32, 34 angebracht, die insgesamt eine Steganordnung 30 bilden. Die Bremsbackenstege 32, 34, welche auch als Stegbleche bezeichnet werden können, erstrecken sich parallel zueinander und sind bogenförmig gestaltet. An einem ersten Ende der Bremsbackenstege 32, 34 ist jeweils ein Lagerbereich 36 bzw. eine Lagerstelle in Form eines Lagerauges 36 ausgebildet. Das gegenüberliegende Ende ist zum Zusammenwirken mit der Betätigungseinrichtung 60 zum Spreizen von gegenüberliegenden Bremsbacken 20, 22 vorgesehen.

In der Ausführungsform gemäß Fig. 1 sind die blechartigen Bremsbackenstege 32, 34 jeweils mit einem geschlossenen Lagerauge 36 ausgeführt. Hierbei ist es jedoch alternativ auch möglich, dass die Bremsbackenstege 32, 34 mit einem um weniger als 180° geöffneten Lagerauge 36 versehen sind. Die Montage der Bremsbacken 20, 22 an einem Bremsträger 50 erfolgt durch ein axiales Einschieben des Lagerbolzens 40 in den Lagerbereich 38 der Bremsbacken 20, 22 und den in der Fig. 1 nicht dargestellten Bremsträger 50. Die axiale Fixierung erfolgt durch eine Sicherungseinrichtung 14, beispielsweise durch Sicherungsringe, welche in entsprechende Nuten 44 am Lagerbolzen 40 eingesetzt werden. Der Lagerbolzen 40 ist bevorzugt ein Abschnitt eines gezogenen Rundstabs mit spanend eingebrachten Nuten 44 in seiner Mantelfläche 42.

Die Ausführungsform gemäß Fig. 2 entspricht weitestgehend der Gestaltung gemäß Fig. 1, so dass insoweit auf die Beschreibung zu Fig. 1 Bezug genommen wird. Im Unterschied zur Fig. 1 ist ein erster Bremsbackensteg 32 mit einem geschlossenen oder um weniger als 180° geöffneten Lagerauge 36 versehen, während ein zweiter Bremsbackensteg 34 ein um 180° oder mehr als 180°geöffnetes Lagerauge 36 aufweist. Die Montage am Bremsträger 50 erfolgt durch axiales Einschieben des Lagerbolzens 40 in die Bremsbacken 20, 22 sowie den Bremsträger 50. Die axiale Fixierung erfolgt ebenfalls beispielsweise durch Sicherungsringe. Insbesondere erfolgt die Montage und die axiale Fixierung analog zur Beschreibung der Ausführungsform gemäß Fig. 1 mit dem Unterschied, dass sich die Möglichkeit ergibt, den Lagerbolzen 40 soweit in den Lagerbereich 38 der ersten Bremsbacke 20 einzuschieben, dass die erste Bremsbacke 20 in Position gehalten wird, während die zweite Bremsbacke 22 montiert wird. Der Vorgang des Einschiebens des Lagerbolzens 40 muss dazu unterbrochen werden, wenn seine Stirnseite bündig zur äußeren Fläche des zweiten Bremsbackenstegs 34 mit dem um 180° geöffneten Lagerauge 36 ist.

Fig. 3 zeigt eine weitere Ausführungsform einer Bremsbacke 20, wobei im Unterschied zur Ausführungsform gemäß Fig. 1 beide Bremsbackenstege 32, 34 mit einem um 180° oder mehr als 180° geöffneten Lagerauge 36 versehen sind. Die Montage und die axiale Fixierung erfolgt analog zur Beschreibung der Ausführungsform gemäß Fig.1 mit dem Unterschied, dass der Lagerbolzen 40 nur durch den Bremsträger 50 axial eingeschoben wird. Die Funktionsflächen des Lagerbolzens 40 können ebenso direkt in den Bremsbackenträger 50 integriert sein. Die Bremsbacken 20, 22 werden im Anschluss auf den Lagerbolzen 40 aufgesetzt bzw. an den Lagerbolzen 40 angelegt. Im Gegensatz zu den beiden vorgenannten Ausführungsformen ist hier eine radiale Fixierung der Bremsbacken 20, 22 zweckmäßig. Die radiale Fixierung der Bremsbacken 20, 22 erfolgt vorzugsweise durch ein nur schematisch angedeutetes Federelement 12, welches beispielsweise zwischen den Bremsbacken 20, 22 gespannt sein kann. Alternativ oder zusätzlich kann auch ein Federelement 12 zwischen jeweils einer Bremsbacke 20, 22 und dem Bremsträger 50 gespannt sein.

Fig. 4 zeigt eine weitere beispielhafte Ausführungsform einer Bremsbacke 20 sowie eines Lagerbolzens 40. Die Bremsbacke 20 entspricht im Wesentlichen der Ausführung gemäß Fig. 3, wobei die Lageraugen 36 in den Bremsbackenstegen 32, 34 jeweils um weniger als 180° geöffnet sind. Der Lagerbolzen 40 ist im Gegensatz zu den Ausführungen gemäß Figuren 1 bis 3 ein Umformteil mit spanender Nacharbeit und weist im Bereich der Lageraugen 36 eine zylindrische Mantelfläche 42 mit auf einer Seite und vorzugsweise in derselben Ebene liegenden Abflachungen 46 auf. Zwischen den Abflachungen 46 weist der Lagerbolzen 40 vorzugsweise eine zylindrische Lagerfläche 43 zu seiner Lagerung am Bremsträger 50 auf. Die mittige, zylindrische Lagerfläche 43 zur Lagerung am Bremsträger 50 kann strukturiert sein, um den Lagerbolzen 40 verdrehsicher am Bremsträger 50 zu lagern. Zur bzw. vor der Montage der Bremsbacken 20, 22 wird der Lagerbolzen 40 axial in den Bremsträger 50 eingeschoben und gegen Verdrehen gesichert, was beispielsweise durch eine strukturierte Lagerfläche 42 erreicht werden kann. Die radiale Fixierung des Lagerbolzens 40 kann beispielsweise durch eine Verdrehung (Verdrehsicherung) erfolgen. Die Bremsbacken 20, 22 können insbesondere in einer definierten Position auf den Lagerbolzen 40 aufgesetzt werden. Dazu sind die Abflachungen 46 an der Mantelfläche 42 vorgesehen. Die radiale Fixierung der Bremsbacken 20, 22 erfolgt dann durch Verschwenken der Bremsbacken 20, 22 in ihre Einbauposition relativ zum gegen Verdrehen gesicherten Lagerbolzen 40. Die axiale Fixierung der Bremsbacken 20, 22 erfolgt in der dargestellten Ausführungsform durch die Geometrie des Lagerbolzens 40, insbesondere durch am Lagerbolzen 40 ausgebildete Anschlagstege 48, 49. Insbesondere weist der Lagerbolzen angrenzend an die Abflachungen 46 entsprechende Anschlagstege 48, 49 auf, wobei ein innenseitiger Anschlagsteg 48 die Abflachung 46 nach innen und ein außenseitiger Anschlagsteg 49 die Abflachung 46 nach außen begrenzt. Ein weiterer Anschlagsteg 47 ist zum Anschlag an den Bremsträger 50 vorgesehen. Grundsätzlich ist es aber auch denkbar, die axiale Fixierung, wie in den Figuren 1 bis 3, durch Sicherungsringe oder andere Sicherungselemente zu realisieren.

### Bezugszeichen

- 10: Bremsvorrichtung
- 12: Federelement
- 14: Sicherungseinrichtung
- 20: erste Bremsbacke
- 22: zweite Bremsbacke
- 24: Schwenkachse
- 28: Bremsbelagträger
- 30: Steganordnung
- 32: erster Bremsbackensteg
- 34: zweiter Bremsbackensteg
- 36: Lagerauge
- 38: Lagerbereich
- 40: Lagerbolzen
- 42: Mantelfläche
- 43: Lagerfläche
- 44: Nut
- 46: Abflachung
- 47: Anschlagsteg
- 48: Anschlagsteg
- 49: Anschlagsteg
- 50: Bremsträger
- 52: Achsöffnung
- 60: Betätigungseinrichtung
- 70: Bremstrommel

## Patentansprüche

1. Bremsvorrichtung zum Bremsen eines Rades, insbesondere Trommelbremse, aufweisend
zwei gegenüberliegende Bremsbacken (20, 22), welche schwenkbar an einem Bremsträger (50) gelagert sind,
wobei die Bremsbacken (20, 22) um eine gemeinsame Schwenkachse (24) schwenkbar gelagert sind,
wobei zumindest eine der Bremsbacken (20, 22) eine Steganordnung (30) mit zwei Bremsbackenstegen (32, 34) aufweist,
**dadurch gekennzeichnet, dass** einer der Bremsbackenstege (32, 34) ein offenes Lagerauge (36) und der andere der Bremsbackenstege (32, 34) ein geschlossenes oder um weniger als 180° geöffnetes Lagerauge (36) aufweisen.

2. Bremsvorrichtung nach Anspruch 1,
wobei die Bremsbacken (20, 22) um bzw. an einem gemeinsamen Lagerbolzen (40) schwenkbar gelagert sind, der vorzugsweise ein kaltgezogener Rundstab ist.

3. Bremsvorrichtung nach Anspruch 2,
wobei eine Sicherungseinrichtung (14) zur axialen Sicherung des Lagerbolzens (40) vorgesehen ist.

4. Bremsvorrichtung nach einem der Ansprüche 2 oder 3,
wobei der Lagerbolzen (40) mindestens eine, vorzugsweise zwei gegenüberliegende Abflachungen (46) im Bereich seiner Mantelfläche (42) aufweist.

5. Bremsvorrichtung nach einem der Ansprüche 2 bis 4,
wobei der Lagerbolzen (40) drehbar an dem Bremsträger (50) angeordnet oder anordenbar ist und zwischen einer ersten Lage, in welcher der Lagerbolzen (40) in ein um weniger als 180° geöffnetes Lagerauge (36) einer Bremsbacke (20, 22) einführbar ist, und einer zweiten Lage verlagerbar ist, in welcher der Lagerbolzen (40) im Lagerauge (36) gehalten ist.

6. Bremsvorrichtung nach einem der vorhergehenden Ansprüche,
wobei die Bremsbacken (20, 22) gleich ausgeführt sind.

7. Bremsvorrichtung nach einem der vorhergehenden Ansprüche,
wobei die Bremsbacken (20, 22) eine Steganordnung (30) mit mindestens einem Bremsbackensteg (32, 34) aufweisen, welche asymmetrisch, insbesondere gegenüber eine Mittenebene der Bremsbacke (20, 22) bzw. des Bremsbelagträgers (28) in axialer Richtung versetzt, an einem Bremsbelagträger (28) angeordnet ist.

8. Bremsvorrichtung nach Anspruch 7,
wobei die Bremsbacken (20, 22) eine Steganordnung (30) mit zwei, insbesondere parallel zueinander verlaufenden, Bremsbackenstegen (32, 34) aufweisen, deren Abstand zur axialen Mittenebene der Bremsbacke (20, 22) bzw. des Bremsbelagträgers (28) unterschiedlich ist.

9. Bremsvorrichtung nach Anspruch 7 oder 8,
wobei das Verhältnis des Versatzes der Steganordnung (30), insbesondere zumindest eines der Bremsbackenstege (32, 34) zu der Erstreckung des Bremsbackensteges (32, 34) entlang der Schwenkachse (24) im Bereich von 1,0 bis 3,0, vorzugsweise 1,1 bis 2,1 und bevorzugt 1,4 bis 1,5 beträgt.

10. Bremsvorrichtung nach einem der vorhergehenden Ansprüche,
wobei das Lagerauge (36) um maximal 180°, vorzugsweise 150° bis 175° geöffnet ist.

11. Bremsbacke für eine Bremsvorrichtung (10) gemäß einem der vorhergehenden Ansprüche, aufweisend
einen Bremsbelagträger (28) zum Aufnehmen eines Bremsbelags und eine Steganordnung (30) mit mindestens einem Bremsbackensteg (32, 34), der mit dem Bremsbelagträger (28) verbunden ist und einen Lagerbereich (38) zum schwenkbaren Lagern an einer Lagereinrichtung aufweist, wobei die Steganordnung (30) asymmetrisch an dem Bremsbelagträger (28) angeordnet ist und in einer axialen Richtung gegenüber einer Mittenebene der Bremsbacke versetzt ist,
**dadurch gekennzeichnet, dass** die Bremsbacken (20, 22) eine Steganordnung (30) mit zwei, insbesondere parallel zueinander verlaufenden, Bremsbackenstegen (32, 34) aufweisen, deren Abstand zur axialen Mittenebene der Bremsbacke (20, 22) bzw. des Bremsbelagträgers (28) unterschiedlich ist.

## Claims

1. A braking device for the braking of a wheel, especially a drum brake, comprising
two opposite brake shoes (20, 22), which are pivotably mounted on a backing plate (50),
wherein the brake shoes (20, 22) are pivotably mounted about a common pivot axis (24),
wherein at least one of the brake shoes (20, 22) comprises a ridge arrangement (30) with two brake shoe ridges (32, 34) **characterized in that**
one of the brake shoe ridges (32, 34) has an open bearing eye (36) and the other of the brake shoe ridges (32, 34) has a closed bearing eye (36) or one which is open by less than 180°.

2. The braking device as claimed in claim 1,
wherein the brake shoes (20, 22) are pivotably mounted about or on a common bearing bolt (40), which is preferably a cold-drawn round rod.

3. The braking device as claimed in claim 2,
wherein a securing device (14) is provided for the axial securing of the bearing bolt (40).

4. The braking device as claimed in one of claims 2 and 3,
wherein the bearing bolt (40) has at least one, preferably two opposing flats (46) in the region of its envelope surface (42).

5. The braking device as claimed in one of claims 2 to 4,
wherein the bearing bolt (40) is or can be arranged so as to be able to rotate on the backing plate (50) and can be moved between a first position, in which the bearing bolt (40) can be inserted into a bearing eye (36) of a brake shoe (20, 22) which is open by less than 180°, and a second position, in which the bearing bolt (40) is held in the bearing eye (36).

6. The braking device as claimed in one of the preceding claims,
wherein the brake shoes (20, 22) are identical in design.

7. The braking device as claimed in one of the preceding claims,
wherein the brake shoes (20, 22) have a ridge arrangement (30) with at least one brake shoe ridge (32, 34), which ridge arrangement is asymmetrically offset in axial direction, arranged on a brake lining support (28), especially relative to a midplane of the brake shoe (20, 22) or the brake lining support (28).

8. The braking device as claimed in claim 7,
wherein the brake shoes (20, 22) have a ridge arrangement (30) with two brake shoe ridges (32, 34), especially ridges running parallel to each other, with different spacing from the axial midplane of the brake shoe (20, 22) or the brake lining support (28).

9. The braking device as claimed in claim 7 or 8,
wherein the ratio of the offset of the ridge arrangement (30), especially at least one of the brake shoe ridges (32, 34), to the extension of the brake shoe ridge (32, 34) along the pivot axis (24) is in the range of 1.0 to 3.0, preferably 1.1 to 2.1 and with preference 1.4 to 1.5.

10. The braking device as claimed in one of the preceding claims,
wherein the bearing eye (36) is open by a maximum of 180°, preferably 150° to 175°.

11. A brake shoe for a braking device (10) as claimed in one of the preceding claims, comprising
a brake lining support (28) to hold a brake lining and
a ridge arrangement (30) with at least one brake shoe ridge (32, 34), which is connected to the brake lining support (28) and has a bearing region (38) for the pivotable mounting on a bearing device,
wherein the ridge arrangement (30) is arranged asymmetrically on the brake lining support (28) and is offset in an axial direction relative to a midplane of the brake shoe
**characterized in that**
the brake shoes (20, 22) have a ridge arrangement (30) with two brake shoe ridges (32, 34), especially ridges running parallel to each other, with different spacing from the axial midplane of the brake shoe (20, 22) or the brake lining support (28).

## Revendications

1. Dispositif de freinage pour freiner une roue, en particulier frein à tambour, comportant
deux mâchoires de frein (20, 22) opposées l'une à l'autre et montées de façon mobile en pivotement sur un support de frein (50),
les mâchoires de frein (20, 22) étant montées de façon mobile en pivotement autour d'un axe de pivotement commun (24),
l'une au moins des mâchoires de frein (20, 22) comprend un ensemble formant âme (30) pourvu de deux âmes de mâchoire de frein (32, 34),
**caractérisé en ce que**
l'une des âmes de mâchoire de frein (32, 34) comprend un œillet de montage ouvert (36) et l'autre des âmes de mâchoire de frein (32, 34) comprend un œillet de montage (36) fermé ou ouvert sur moins de 180°.

2. Dispositif de freinage selon la revendication 1,
dans lequel
les mâchoires de frein (20, 22) sont montées de façon mobile en pivotement autour ou sur un goujon de montage commun (40) qui est de préférence un barreau rond étiré à froid.

3. Dispositif de freinage selon la revendication 2,
dans lequel
il est prévu un moyen de blocage (14) pour le blocage axial du goujon de montage (40).

4. Dispositif de freinage selon l'une des revendications 2 ou 3,
dans lequel
le goujon de montage (40) présente au moins un, de préférence deux méplats (46) opposés l'un à l'autre au niveau de sa surface enveloppe (42).

5. Dispositif de freinage selon l'une des revendications 2 à 4,
dans lequel
le goujon de montage (40) est disposé ou susceptible d'être disposé de façon mobile en rotation sur le support de frein (50) et est déplaçable entre une première position dans laquelle le goujon de montage (40) peut être introduit dans un œillet de montage (36) d'une mâchoire de frein (20, 22) ouvert sur moins de 180°, et une seconde position dans laquelle le goujon de montage (40) est maintenu dans l'œillet de montage (36).

6. Dispositif de freinage selon l'une des revendications précédentes,
dans lequel
les mâchoires de frein (20, 22) sont réalisées de façon identique.

7. Dispositif de freinage selon l'une des revendications précédentes,
dans lequel
les mâchoires de frein (20, 22) présentent un ensemble formant âme (30) ayant au moins une âme de mâchoire de frein (32, 34) qui est disposée sur un support de garniture de frein (28) de façon asymétrique, en particulier de façon décalée en direction axiale par rapport à un plan médian de la mâchoire de frein (20, 22) ou du support de garniture de frein (28).

8. Dispositif de freinage selon la revendication 7,
dans lequel
les mâchoires de frein (20, 22) présentent un ensemble formant âme (30) ayant au moins deux âmes de mâchoire de frein (32, 34) qui s'étendent en particulier parallèlement l'une à l'autre et dont la distance par rapport au plan médian axial de la mâchoire de frein (20, 22) ou du support de garniture de frein (28) est différente.

9. Dispositif de freinage selon la revendication 7 ou 8,
dans lequel
le rapport du décalage de l'ensemble formant âme (30), en particulier de l'une des âmes de mâchoire de frein (32, 34), sur l'extension de l'âme de mâchoire de frein (32, 34) le long de l'axe de pivotement (24) est dans la plage de 1,0 à 3,0, de préférence de 1,1 à 2,1 et de manière préférée de 1,4 à 1,5.

10. Dispositif de freinage selon l'une des revendications précédentes,
dans lequel
l'œillet de montage (36) est ouvert au maximum sur 180°, de préférence sur 150° à 175°.

11. Mâchoire de frein pour un dispositif de freinage (10) selon l'une des revendications précédentes, comportant
un support de garniture de frein (28) pour recevoir une garniture de frein et un ensemble formant âme (30) ayant au moins une âme de mâchoire de frein (32, 34) qui est reliée au support de garniture de frein (28) et qui présente une zone de montage (38) pour le montage mobile en pivotement sur un moyen formant palier,
dans lequel
l'ensemble formant âme (30) est disposé de façon asymétrique sur le support de garniture de frein (28) et décalé en direction axiale par rapport à un plan médian de la mâchoire de frein,
**caractérisée en ce que**
les mâchoires de frein (20, 22) présentent un ensemble formant âme (30) ayant deux âmes de mâchoire de frein (32, 34) qui s'étendent en particulier parallèlement l'une à l'autre et dont la distance par rapport au plan médian axial de la mâchoire de frein (20, 22) ou du support de garniture de frein (28) est différente.
